# EUROPEAN PATENT SPECIFICATION

(11) **EP 1 927 530 B1**
(45) Date of publication and mention of the grant of the patent: **14.10.2009**
(21) Application number: 06125281.3
(22) Date of filing: 01.12.2006
(51) Int. Cl.: B62D 21/11, B62D 23/00, B62D 25/08, B62D 29/00

(54) **A subframe mount for an automotive frame**
Hilfsrahmenbefestigung eines Kraftfahrzeugrahmens
Montage d'un faux cadre pour le châssis d'un véhicule automobile

(43) Date of publication of application: 04.06.2008
(73) Proprietor: Ford Global Technologies, LLC, Dearborn, MI 48126 (US); Vari-Form, Inc., Warren MI 48089-2614 (US)
(72) Inventor: Caliskan, Ari, Canton, MI 48187 (US); Gericke, Dean, Brighton, MI 48116 (US)
(74) Representative: Messulam, Alec Moses

(56) References cited:
- WO-A-02/38434
- US-A- 4 986 597
- US-A- 5 839 776
- US-A1- 2006 197 300

## Description

This invention relates to lower frame mid-rails for an automotive vehicle and, more particularly, to a mount assembly for attaching a subframe structure to a hydroformed mid-rail assembly formed from a pair of side-by-side tubular members.

Lower frame mid-rails in an automotive vehicle support the central part of an automotive chassis and provide a cantilevered support for the rear bumper assembly. Conventionally, the rear bumper assembly would include a transverse bumper beam, lower frame rails and appropriate attachment brackets for connecting the bumper beam to the lower frame rails and the lower frame rails to the mid-rails. The rear shock tower support members are mounted on top of the mid-rails, conventionally in a cantilevered manner off of a single fabricated rail structure.

Conventional automotive frame designs are formed from fabricated steel components that are provided with many reinforcements affixed to the frame to accommodate the attachment of subframe components to the frame structure. The reinforcements permit the localized loads coming from subframe structures or other secondary structures to be transmitted into the frame structure without distortion of the frame. The formation of frame structure, such as the lower mid-rail frame structure from tubular hydroformed components, provides unique opportunities for the support and mounting of subframe components from a hydroformed frame structure.

Conventional clamps and brackets for attaching apparatus to frame structure can be found in US Patent No. 1,697,498, issued to Rollie B. Rageol on January 1, 1929; and in US Patent No. 2,248,344, issued to Louis J. Epps on July 8, 1941, where structure is mounted to tubular bumper components; in US Patent No. 2,270,533, issued to Joseph F. Knutte on January 20, 1942; and in US Patent No. 5,215,343, issued to William C. Fortune on June 1, 1993, where components are mounted to non-tubular bumper components. Clamping frame components together with couplings that become welded to the tubular frame members is taught in US Patent No. 6,022,070, issued to Toshiro Ashina, et al on February 8, 2000.

Hollow tubular members are used as reinforcements for an automotive frame structure in US Patent No. 4,986,597, issued to Edvin L. Clausen on January 22, 1991. Hydroformed automotive frame components are disclosed in US Patent No. 6,302,478, issued to Federico G. Jackel, et al on October 16, 2001. In the Jackel frame structure, the hydroformed components are manufactured with flanges that will at least partially encompass a frame or subframe part to be joined thereto to facilitate the welding of the two components through the interaction with the flange components. Another example of an arrangement similar to this and disclosing the preambles of the independent claims is provided in US 5,839,776 by Clausen and Gundlach.

It would be desirable to provide an apparatus for the mounting of subframe structural components to the lower frame mid-rails. Since the lower frame mid-rails are to be formed from a pair of vertically oriented, but horizontally disposed tubular components, a unique apparatus to be particularly adaptable for use in conjunction with the lower frame rail structure of an automobile that are particularly adaptable to manufacturing through hydroforming processes and which can be utilized to provide a stable support for the rear shock tower.

It is an object of this invention to overcome the aforementioned disadvantages of the known prior art by providing an attachment mount to be supported by a lower frame mid-rail structure that is formed from a pair of tubular members.

According to a first aspect of the invention there is provided a subframe mount in an automotive frame member, the frame member having a pair of tubular members oriented adjacent one another to position respective inner walls of the respective tubular members adjacent one another to define an internal web in the automotive frame member, the tubular members also having opposing outer walls spaced from the inner walls, characterised in that the subframe mount comprises a cylindrical mounting member perpendicularly affixed to a mounting plate, the cylindrical member being received within a cylindrical pocket formed in the inner walls of the tubular members.

Preferably, the pocket may have an opening accessible externally of the frame member to permit the insertion of a fastener into the cylindrical mounting member for the purpose of securing a subframe component.

The tubular members may be formed with a first opening through the inner and outer walls for the passage of the mounting plate through the tubular members.

The pocket may be formed from a semi-cylindrical depression formed into each respective inner wall of the tubular members.

The semi-cylindrical depression in one of the tubular members may be formed with a second opening for the passage of the cylindrical mounting member into the pocket, the outer wall of the one tubular member also being formed with the second opening to permit the passage of the cylindrical mounting member from outside the frame member laterally into the pocket.

The first and second openings may be formed together in the one tubular member so that the cylindrical mounting member and the mounting plate can laterally pass through the one tubular member.

The mounting plate may be supported on the inner and outer walls of the tubular members, the mounting plate being welded to the outer walls of the tubular members to affix the subframe mount to the frame member.

According to a second aspect of the invention there is provided a method of providing a subframe mount in an automotive frame member, the frame member including a pair of laterally disposed tubular members, each of which has an inner wall and an outer wall, the inner walls being positioned adjacent one another to define an internal web in the automotive frame member, characterised in that the method comprises the steps of forming a semi-cylindrical depression in each of the inner walls, aligning the semi-cylindrical depressions to form a cylindrical pocket within the internal web and positioning a cylindrical mounting member within the cylindrical pocket, the cylindrical mounting member being affixed to a mounting plate that is supported on each of the inner and outer walls.

The inner and outer walls may be formed with a first opening to permit the passage of the mounting plate for support on each of the inner and outer walls.

One of the semi-cylindrical depressions may be formed with a second opening to permit the lateral passage of the cylindrical mounting member into the pocket, the outer wall corresponding to the one semi-cylindrical depression also having a second opening formed therein to permit the lateral passage of the cylindrical mounting member into the pocket.

The cylindrical mounting member may be affixed to the mounting plate.

The mounting plate may be affixed to the outer walls of the tubular members.

The cylindrical pocket may be formed with an opening to permit insertion of a fastener from externally of the tubular members into a threaded bore of the cylindrical mounting member.

The one semi-cylindrical depression and corresponding outer wall into which the second openings are formed are part of the interior tubular member, the outer wall of the exterior tubular member only having the first opening formed therein.

The method may further comprise the step of establishing a first opening through each of the inner and outer walls in alignment for the passage of the mounting plate.

The method may further comprise the step of creating a second opening in one of the semi-cylindrical depressions and the corresponding the outer wall of one of the tubular members, the second opening being formed with the first opening.

The positioning step may include the step of passing the mounting plate and the cylindrical mounting member laterally through the first and second openings in the one semi-cylindrical depression and the outer wall of the one tubular member, the other semi-cylindrical depression serving as a stop with respect to the lateral movement of the cylindrical mounting member.

The method may further comprise the step of welding the mounting plate to both the outer walls to secure the subframe mount to the frame member.

The method may further comprise connecting a subframe member to the subframe mount by engaging a fastener through an access opening through the frame member to engage a threaded bore within the cylindrical mounting member.

The forming, establishing and creating steps may be accomplished during a hydroforming process to form the tubular members.

It is an advantage of this invention that the hydroformed lower frame mid-rail structure is formed to receive a cylindrical subframe mount structure within the interior of the dual tube mid-rail structure.

It is still another advantage of this invention that the attachment mount can be welded to both of the tubular members of the lower frame mid-rails to increase stability of the subframe mount.

It is still another advantage of this invention that the subframe mounting structure is supported by both outer walls of the hydroformed lower frame mid-rail structure and by the interior adjoining walls thereof.

It is still another advantage of this invention that the subframe attachment mount can be utilized between any hydroformed tubular members that are joined together to form a component to which a subcomponent needs to be attached.

The invention will now be described by way of example with reference to the accompanying drawing of which:-
Fig.1 is a top plan view of the single component bumper and lower frame rail structure to form the rear frame structure for an automobile incorporating the principles of the instant invention;
Fig.2 is a side elevational view of the bumper and lower frame rail structure depicted in Fig.1;
Fig.3 is a bottom perspective view of the bumper and lower frame rail structure shown in Fig.1;
Fig.4 is an enlarged perspective detail view of a portion of the lower frame mid-rail with a portion of one of the tubular members forming the mid-rail being broken away to better see the mounting apparatus;
Fig.5 is an enlarged bottom perspective view of a portion of the lower frame mid-rail to depict the opening into the mid-rail to engage the mounting apparatus;
Fig.6 is an enlarged partial cross-sectional view of the lower frame mid-rail taken along line 6-6 on Fig.2 to show an internal elevational view of the mounting apparatus incorporating the principles of the instant invention;
Fig.7 is an elevational view of a portion of the exterior side of the lower frame mid-rail at the mounting apparatus; and
Fig.8 is an elevational view of a portion of the interior side of the lower frame mid-rail at the mounting apparatus.

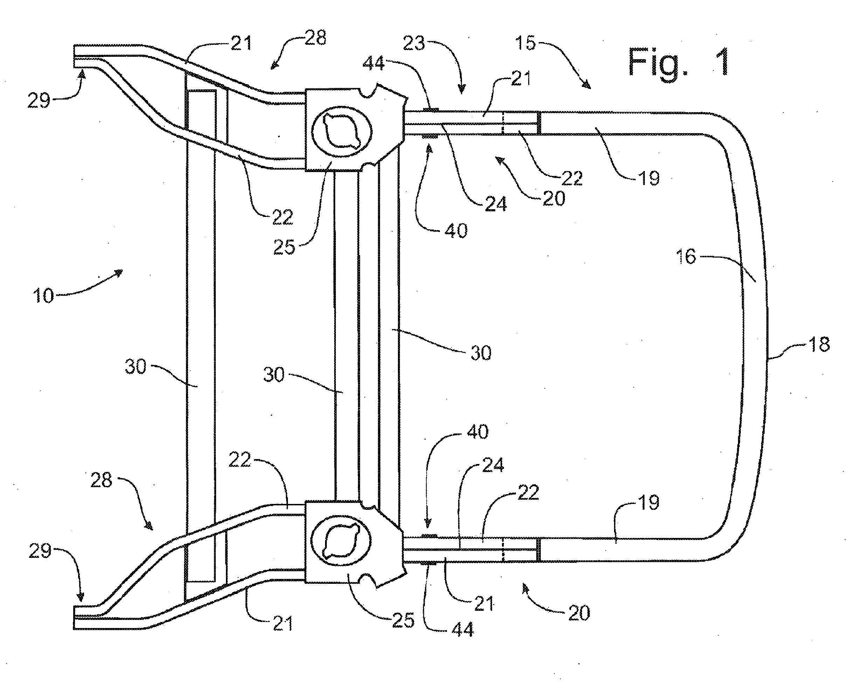

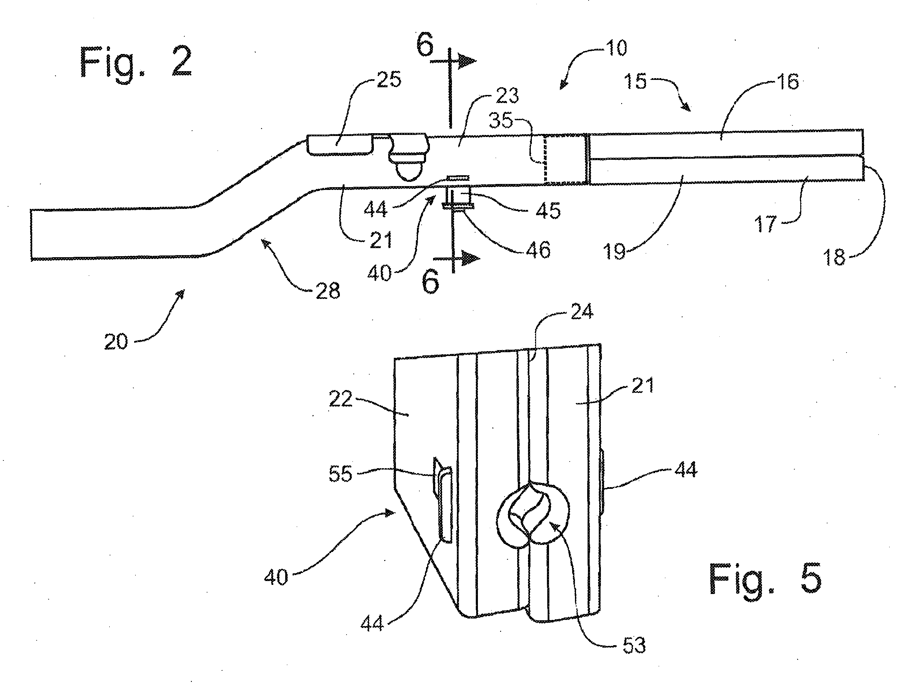

Referring to Figs.1 and 2, a bumper and lower frame rail, including a shock tower support, forming a part of the rear end of an automobile frame and incorporating the principles of the instant invention, can best be seen. The frame 10 of the automobile is preferably formed from hydroformed tubular members. Such tubular members can be spot-welded and/or MIG-welded to form an integral frame assembly for the rear end of a vehicle.

Hydroforming is a process by which a standard tubular stock member is placed into a form shaped to correspond to the particular member to be formed and to correspond to the particular section required for the frame design. A liquid is then introduced into the interior of the tubular stock and pressurized until the tubular stock expands to assume the shape defined by the configured form. The expanded and re-shaped tubular stock now has a substantially different shape. By forming cut outs and other access openings into the re-shaped tubular member, spot-welding electrodes can gain access to opposing adjacent sides to create a weld bond between juxtaposed members. In this manner, a frame, as an example, for an automobile can be created using in large part hydroformed tubular members. One skilled in the art will readily recognize that some MIG-welding will be required in areas where access holes are detrimental to the integrity of the frame structure. Preferably, such MIG-welding processes are performed at a sub-assembly or at a supplier level.

In the automotive rear end frame 10 depicted in the drawings, the bumper 15 is formed from welded hydroformed members. Similarly, the lower frame rails 20, which connect to the bumper 15 and project forwardly therefrom, are formed from tubular hydroformed members. The shock tower support member 25 is preferably a stamping that is formed into a specific shape and mounted on the lower frame rails 20, as is described in greater detail below.

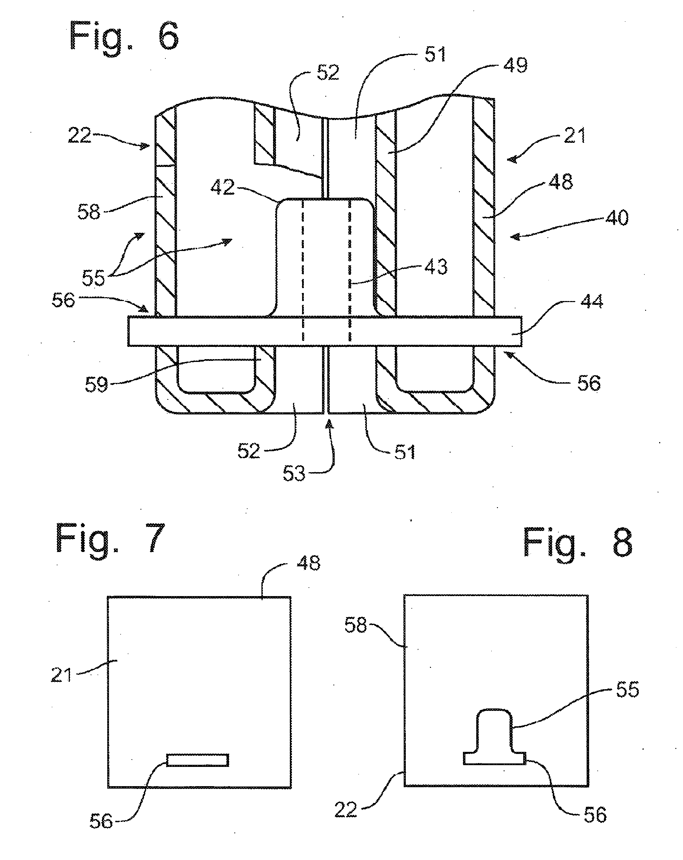

The lower frame rail 20 is formed from two hydroformed tubular members 21, 22 that have corresponding first longitudinally extending portions 23 that are welded together at the rearwardmost end of the members 21, 22 preferably by MIG-welding along the generally horizontal seam between the members 21, 22. As is best seen in Figs. 1 and 3 to 6, the lower frame rail structure 20 would then have an internal vertical web 24 formed from the adjacent sidewalls of the two tubular members 21, 22, oriented as an exterior member 21 and an interior member 22. The internal web 24 substantially increases the strength and stiffness of the lower frame rail 20, compared to a conventional tubular member.

The longitudinally extending portions 23 are positioned for connection to the bumper 15. Forwardly of the longitudinally extending portions 23, the two tubular members 21, 22 diverge to define a divergent portion 28 to provide a lateral spacing between the two members 21, 22. At this point of divergence, the shock tower support 25 is affixed, preferably by welding, to the top of the two tubular members 21, 22. The tubular members 21, 22 converge into a second longitudinally extending portion 29 forward of said divergent portion 28.

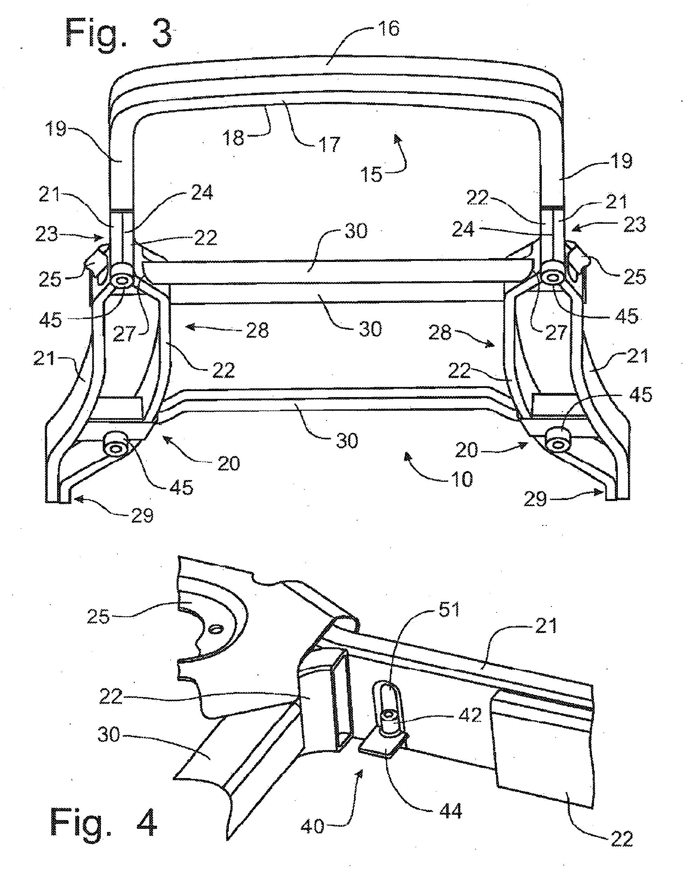

Preferably, as is best seen in Fig.3, at least one of the cross frame members 30 adjacent the shock tower support 25 will pass through appropriate openings 27 in the interior tubular member 22 to engage the exterior tubular member 21 to permit welding between both members 21, 22 and the cross frame member 30. Such fabrication will add cross-vehicle stiffness to the frame 10, as well as provide a robust joint at the shock tower support 25. Preferably, the interior and exterior tubular members 21, 22 converge so that the lower frame rail 20 will extend forwardly with a central vertical web 24, as is shown with respect to the rearward longitudinally extending portions 23.

The bumper 15 can also be constructed from two hydroformed members 16, 17, with the upper tubular member 16 being located on top of the lower tubular member 17. Preferably both tubular bumper members 16, 17 are shaped substantially identically with a rearwardly positioned bight portion 18 and opposing mounting legs 19. The two tubular members 16, 17 can be MIG-welded along the generally horizontally extending seam therebetween to form a dual-celled bumper 15. Formation of the tubular members through the hydroforming process permits the introduction of deformation triggers (not shown), i.e. fold points to direct the deformation of the bumper in a prescribed manner when encountering an impact load.

As best seen in Fig.1, the forward ends of the mounting legs 19 are formed to mate with the dual tube lower frame rails 20. Each tubular member 16, 17 is formed with a reduced-sized terminal end 35 that can fit between the interior and exterior sidewalls of the lower frame rails 20, whereas the remainder of the mounting legs 19 are formed to correspond geometrically with the longitudinally extending portions 23 of the lower frame rails 20. As a result, the insertion of the reduced-sized terminal end 35 into the rearward ends of the lower frame rails 20 results in a generally uniformly shaped frame 10 with the overall width and depth of the bumper structure 15 being substantially equal to the overall width and depth of the lower frame rails 20.

The lower frame rail 20 is also utilized to support various subframe components that have to be attached to the frame rails for proper support thereof. Accordingly, as is best seen in all the drawings, but particularly in Figs. 5 to 8, the lower frame rail 20 is manufactured to incorporate a subframe attachment mount 40 that is positioned at the centreline of the lower frame rail 20, as will be described in greater detail below. The subframe attachment mount 40 is formed with a flat mounting plate 44 with a cylindrical mounting member 42 projecting perpendicularly thereto. The centre of the cylindrical mounting member 42 is preferably formed with a threaded bore 43.

To receive the subframe attachment member 40, each interior wall 49, 59 defining the internal vertical web 24 of the tubular members 21, 22 is formed with a semi-cylindrical depression 51, 52 that, when placed adjacent one another form a cylindrical pocket or cavity that is sized to receive the cylindrical mounting member 42. The formation of the semi-cylindrical depressions 51, 52 also causes the interior walls 49, 59 to be shaped in a semi-circular configuration to provide a stable support for the mounting plate 44. At the same time the semi-cylindrical depressions 51, 52 are being formed, an access opening 53 is formed on the lower surface of the lower frame rails 20 to be in alignment with the threaded bore 43 into the mounting member 42 to permit the engagement of the mounting member 42 with a fastener 46.

To allow for access of the mounting member 42 and the mounting plate 44 into the assembled lower frame rail 20, the exterior wall 58 and the interior wall 52 are formed or pierced with an opening 55 to accommodate the passage of the cylindrical member 42 into the interior of the lower frame rail 20. By only opening the exterior wall and the interior wall of the interior tubular member 22 for the passage of the subframe mounting member 42, the cylindrical mounting member 42 can be seated against the semi-cylindrical depression 51 formed into the exterior tubular member 21 to serve as a stop for positioning the mounting member 42.

An additional opening 56 is formed in both of the tubular members 21, 22 for the passage of the mounting plate 44. In the interior tubular member 22, the opening 56 is formed with the opening 55 to define a single opening for the passage of the subframe mount 40. The opening 56 for the mounting plate 44, however, extends through the semi-cylindrical depression 51 formed in the inner wall 49 and through the outer wall 48 so that the mounting plate 44 can be supported on each of the four walls 48, 49, 58, 59 of the lower frame mid-rail 20, and welded to at least the outer walls 48, 58 to secure the mounting plate 44 and affixed mounting member 42 to the lower frame mid-rail structure 20.

The subframe mount 40 is not limited in use to the lower frame mid-rail structure 20, but can be utilized in other frame configurations in which a pair of members can be formed with semi-cylindrical depressions to seat the cylindrical mounting member 42 and the support of the mounting plate 44 can be spread over at least two supports, such as the outer walls 48, 58.

In use, the subframe mount 40 is assembled as described above and welded into position on the frame structure 20. The subframe assembly to be supported from the frame 20 can then be attached to the frame structure 20 by a fastener 46 that passes through an external support member 45 and extends through an opening in the mounting plate 44 to engage the threaded bore 43 of the cylindrical member 42.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as defined by the appended claims.

## Claims

1. A subframe mount (40) in an automotive frame member (20), the frame member having a pair of tubular members (21,22) oriented adjacent one another to position respective inner walls (49,59) of the respective tubular members adjacent one another to define an internal web (24) in the automotive frame member, the tubular members also having opposing outer walls spaced from the inner walls,
**characterised in that** the subframe mount (40) comprises a cylindrical mounting member (42) perpendicularly affixed to a mounting plate (44), the cylindrical member being received within a cylindrical pocket formed in the inner walls of the tubular members.

2. A mount as claimed in claim 1 wherein the pocket has an opening (53) accessible externally of the frame member to permit the insertion of a fastener (46) into the cylindrical mounting member (42) for the purpose of securing a subframe component.

3. A mount as claimed in Claim 1 or in claim 2 wherein the tubular members (21,22) are formed with a first opening (55) through the inner and outer walls for the passage of the mounting plate through the tubular members.

4. A mount as claimed in any of Claims 1 to 3 wherein the pocket is formed from a semi-cylindrical depression (51,52) formed into each respective inner wall of the tubular members.

5. A mount as claimed in Claim 4 wherein the semi-cylindrical depression in one of the tubular members is formed with a second opening (56) for the passage of the cylindrical mounting member into the pocket, the outer wall of the one tubular member also being formed with the second opening to permit the passage of the cylindrical mounting member from outside the frame member laterally into the pocket.

6. A mount as claimed in Claim 5 wherein the first and second openings (55,56) are formed together in the one tubular member so that the cylindrical mounting member (42) and the mounting plate (44) can laterally pass through the one tubular member.

7. A mount as claimed in any of Claims 1 to 6 wherein the mounting plate (44) is supported on the inner and outer walls of the tubular members (21,22), the mounting plate being welded to the outer walls of the tubular members to affix the subframe mount to the frame member.

8. A lower frame rail assembly for an automobile comprising an interior tubular member (22) having an inner wall (49) and an outer wall (48), an exterior tubular member (21) having an inner wall (59) and an outer wall (58) with height and width dimensions substantially equal to the interior tubular member, the interior and exterior tubular members (22,21) being welded together to form a longitudinally extending portion with the inner walls (49,59) being positioned adjacent one another to define a generally vertically oriented internal web (24), each of the inner walls being formed with a semi-cylindrical depression (51,52) aligned to define a cylindrical pocket within the internal web (24) and a subframe mount (40) as claimed in any of claims 1 to 6 wherein the mounting plate (44) of the subframe mount is supported on the inner (49,59) and outer walls (48,58) of the tubular members (21,22) and the cylindrical mounting member (42) of the subframe mount is positioned within the cylindrical pocket and is affixed on the mounting plate to distribute any loads encountered thereby across the inner and outer walls.

9. A lower frame rail assembly as claimed in Claim 8 wherein the inner and outer walls are formed with a first opening (55) to permit the passage of the mounting plate for support on each of the inner and outer walls.

10. A lower frame rail assembly as claimed in Claim 8 or in Claim 9 wherein one of the semi-cylindrical depressions is formed with a second opening (56) to permit the lateral passage of the cylindrical mounting member into the pocket, the outer wall corresponding to the one semi-cylindrical depression also having a second opening formed therein to permit the lateral passage of the cylindrical mounting member into the pocket.

11. A lower frame rail assembly as claimed in any of Claim 8 to 10 wherein the mounting plate is affixed to the outer walls (48,58) of the tubular members.

12. A lower frame rail assembly as claimed in any of Claims 8 to 11 wherein the cylindrical pocket is formed with an opening to permit insertion of a fastener (46) from externally of the tubular members (21,22) into a threaded bore of the cylindrical mounting member (42).

13. A lower frame rail assembly as claimed in any of Claims 8 to 12 wherein the one semi-cylindrical depression and corresponding outer wall into which the second openings are formed are part of the interior tubular member, the outer wall of the exterior tubular member only having the first opening formed therein.

14. A method of providing a subframe mount in an automotive frame member, the frame member including a pair of laterally disposed tubular members, each of which has an inner wall and an outer wall, the inner walls being positioned adjacent one another to define an internal web in the automotive frame member,
**characterised in that** the method comprises the steps of
forming a semi-cylindrical depression in each of the inner walls,
aligning the semi-cylindrical depressions to form a cylindrical pocket within the internal web and positioning a cylindrical mounting member within the cylindrical pocket,
the cylindrical mounting member being affixed to a mounting plate that is supported on each of the inner and outer walls.

15. A method as claimed in Claim 14 wherein the method further comprises the step of establishing a first opening through each of the inner and outer walls in alignment for the passage of the mounting plate.

16. A method as claimed in Claim 15 wherein the method further comprises the step of creating a second opening in one of the semi-cylindrical depressions and the corresponding the outer wall of one of the tubular members, the second opening being formed with the first opening.

17. A method as claimed in any of Claims 14 to 16 wherein the positioning step includes the step of passing the mounting plate and the cylindrical mounting member laterally through the first and second openings in the one semi-cylindrical depression and the outer wall of the one tubular member, the semi-cylindrical depression serving as a stop with respect to the lateral movement of the cylindrical mounting member.

18. A method as claimed in any of Claims 14 to 17 wherein the method further comprises the step of welding the mounting plate to both the outer walls to secure the subframe mount to the frame member.

19. A method as claimed in any of Claims 14 to 18 wherein the method further comprises connecting a subframe member to the subframe mount by engaging a fastener through an access opening through the frame member to engage a threaded bore within the cylindrical mounting member.

20. A method as claimed in any of Claims 14 to 19 wherein the forming, establishing and creating steps are accomplished during a hydroforming process to form the tubular members.

## Patentansprüche

1. Hilfsrahmenhalterung (40) in einem Kraftfahrzeug-Rahmenträger (20), wobei der Rahmenträger über ein Paar rohrförmiger Elemente (21, 22) verfügt, die so ausgerichtet sind, dass sie nebeneinander liegen, um die jeweiligen Innenwände (49, 59) der jeweiligen rohrförmigen Elemente nebeneinander zu positionieren, um einen innenliegenden Steg (24) im Kraftfahrzeug-Rahmenträger zu bilden, wobei die rohrförmigen Elemente auch über gegenüberliegende Außenwände verfügen, die mit Zwischenraum zu den Innenwänden angeordnet sind,
**dadurch gekennzeichnet, dass** die Hilfsrahmenhalterung (40) ein zylindrisches Befestigungselement (42) umfasst, das rechtwinklig zu einer Befestigungsplatte (44) an dieser angebracht ist, wobei das zylindrische Element in einem zylindrischen Hohlraum aufgenommen wird, der in den Innenwänden der rohrförmigen Elemente gebildet wird.

2. Halterung gemäß Anspruch 1, wobei der Hohlraum über eine Öffnung (53) verfügt, die von außerhalb des Rahmenträgers zugänglich ist, um die Einführung eines Verbindungselements (46) in das zylindrische Befestigungselement (42) zur Befestigung eines Hilfsrahmenbauteils zu ermöglichen.

3. Halterung gemäß Anspruch 1 oder Anspruch 2, wobei die rohrförmigen Elemente (21, 22) zur Durchführung der Befestigungsplatte durch die rohrförmigen Elemente mit einer ersten Öffnung (55) durch die Innen- und Außenwände gebildet werden.

4. Halterung gemäß einem der Ansprüche 1 bis 3, wobei der Hohlraum durch eine halbzylindrische Vertiefung (51, 52) gebildet wird, die injeder der jeweiligen Innenwände der rohrförmigen Elemente gebildet wird.

5. Halterung gemäß Anspruch 4, wobei die halbzylindrische Vertiefung in einem der rohrförmigen Elemente mit einer zweiten Öffnung (56) für die Durchführung des zylindrischen Befestigungselements in den Hohlraum gebildet wird, wobei die Außenwand des einen rohrförmigen Elements ebenfalls mit der zweiten Öffnung gebildet wird, um die Durchführung des zylindrischen Befestigungselements von außerhalb des Rahmenträgers seitlich in den Hohlraum zu ermöglichen.

6. Halterung gemäß Anspruch 5, wobei die ersten und die zweiten Öffnungen (55, 56) zusammen in dem einen rohrförmigen Element gebildet werden, sodass das zylindrische Befestigungselement (42) und die Befestigungsplatte (44) seitlich durch das eine rohrförmige Element durchgeführt werden können.

7. Halterung gemäß einem der Ansprüche 1 bis 6, wobei die Befestigungsplatte (44) an den Innen- und Außenwänden der rohrförmigen Elemente (21, 22) aufliegt und die Befestigungsplatte an die Außenwände der rohrförmigen Elemente geschweißt ist, um die Hilfsrahmenhalterung am Rahmenträger anzubringen.

8. Unterrahmenträger-Baugruppe für ein Kraftfahrzeug, umfassend: ein inneres rohrförmiges Element (22) mit einer Innenwand (49) und einer Außenwand (48); ein äußeres rohrförmiges Element (21) mit einer Innenwand (59) und einer Außenwand (58) mit Höhen- und Breitenmaßen, die im Wesentlichen dem inneren rohrförmigen Element entsprechen, wobei das innere und das äußere rohrförmige Element (22, 21) zusammengeschweißt sind, um einen sich längs erstreckenden Abschnitt zu bilden, bei dem die Innenwände (49, 59) nebeneinander positioniert sind, um einen im Allgemeinen senkrecht ausgerichteten innenliegenden Steg (24) zu bilden, wobei jede der innenliegenden Wände mit einer halbzylindrischen Vertiefung (51, 52) gebildet und so ausgerichtet wird, dass ein zylindrischer Hohlraum im innenliegenden Steg (24) gebildet wird; und eine Hilfsrahmenhalterung (40) gemäß einem der Ansprüche 1 bis 6, wobei die Befestigungsplatte (44) der Hilfsrahmenhalterung auf den Innen- (49, 59) und Außenwänden (48, 58) der rohrförmigen Elemente (21, 22) aufliegt und das zylindrische Befestigungselement (42) der Hilfsrahmenhalterung im zylindrischen Hohlraum positioniert ist und an der Befestigungsplatte angebracht ist, um damit etwaige anfallende Lasten über die Innen- und Außenwände zu verteilen.

9. Unterrahmenträger-Baugruppe gemäß Anspruch 8, wobei die Innen- und Außenwände mit einer ersten Öffnung (55) gebildet werden, um die Durchführung der Befestigungsplatte zur Abstützung auf jeder der Innen- und Außenwände zu ermöglichen.

10. Unterrahmenträger-Baugruppe gemäß Anspruch 8 oder Anspruch 9, wobei eine der halbzylindrischen Vertiefungen mit einer zweiten Öffnung (56) gebildet wird, um die seitliche Durchführung des zylindrischen Befestigungselements in den Hohlraum zu ermöglichen, wobei die zu der einen halbzylindrischen Vertiefung gehörige Außenwand ebenfalls über eine zweite Öffnung verfügt, die darin gebildet wurde, um die seitliche Durchführung des zylindrischen Befestigungselements in den Hohlraum zu ermöglichen.

11. Unterrahmenträger-Baugruppe gemäß einem der Ansprüche 8 bis 10, wobei die Befestigungsplatte an den Außenwänden (48, 58) der rohrförmigen Elemente angebracht ist.

12. Unterrahmenträger-Baugruppe gemäß einem der Ansprüche 8 bis 11, wobei der zylindrische Hohlraum mit einer Öffnung gebildet wird, um die Einführung eines Verbindungselements (46) von außerhalb der rohrförmigen Elemente (21, 22) in eine mit Gewinde versehene Bohrung des zylindrischen Befestigungselements (42) zu ermöglichen.

13. Unterrahmenträger-Baugruppe gemäß einem der Ansprüche 8 bis 12, wobei die eine halbzylindrische Vertiefung und zugehörige Außenwand, in der die zweiten Öffnungen gebildet werden, Teil des inneren rohrförmigen Elements sind, während in der Außenwand des äußeren rohrförmigen Elements nur die erste Öffnung gebildet wird.

14. Verfahren zur Bereitstellung einer Hilfsrahmenhalterung in einem Kraftfahrzeug-Rahmenträger, wobei der Rahmenträger ein Paar seitlich angeordnete rohrförmige Elemente enthält, die jeweils über eine Innen- und eine Außenwand verfügen, wobei die Innenwände nebeneinander positioniert sind, um einen innenliegenden Steg im Kraftfahrzeug-Rahmenträger zu bilden,
**dadurch gekennzeichnet, dass** das Verfahren folgende Schritte umfasst:
Bildung einer halbzylindrischen Vertiefung in jeder der Innenwände,
Ausrichtung der halbzylindrischen Vertiefungen, um einen zylindrischen Hohlraum im innenliegenden Steg zu bilden, und Positionierung eines zylindrischen Befestigungselements in dem zylindrischen Hohlraum,
wobei das zylindrische Befestigungselement an einer Befestigungsplatte angebracht ist, die aufjeder der Innen- und Außenwände aufliegt.

15. Verfahren gemäß Anspruch 14, wobei das Verfahren ferner den Schritt der Herstellung einer ersten Öffnung durch jede der für die Durchführung der Befestigungsplatte aufeinander ausgerichteten Innen- und Außenwände umfasst.

16. Verfahren gemäß Anspruch 15, wobei das Verfahren ferner den Schritt der Schaffung einer zweiten Öffnung in einer der halbzylindrischen Vertiefungen und der zugehörigen Außenwand des einen rohrförmigen Elements umfasst, wobei die zweite Öffnung mit der ersten Öffnung gebildet wird.

17. Verfahren gemäß einem der Ansprüche 14 bis 16, wobei der Positionierungsschritt den Schritt der seitlichen Durchführung der Befestigungsplatte und des zylindrischen Befestigungselements durch die ersten und zweiten Öffnungen in der einen halbzylindrischen Vertiefung und der Außenwand des einen rohrförmigen Elements umfasst, wobei die halbzylindrische Vertiefung im Hinblick auf die seitliche Bewegung des zylindrischen Befestigungselements als Anschlag dient.

18. Verfahren gemäß einem der Ansprüche 14 bis 17, wobei das Verfahren ferner den Schritt des Anschweißens der Befestigungsplatte an die beiden Außenwände umfasst, um die Hilfsrahmenhalterung am Rahmenträger zu befestigen.

19. Verfahren gemäß einem der Ansprüche 14 bis 18, wobei das Verfahren ferner die Verbindung eines Hilfsrahmenträgers mit der Hilfsrahmenhalterung durch Ineingriffbringen eines Verbindungselements durch eine Zugangsöffnung durch den Rahmenträger umfasst, um eine mit Gewinde versehene Bohrung im zylindrischen Befestigungselement in Eingriff zu bringen.

20. Verfahren gemäß einem der Ansprüche 14 bis 19, wobei die Bildungs-, Herstellungs- und Schaffungsschritte während eines Hydroforming-Prozesses zur Formung der rohrförmigen Elemente durchgeführt werden.

## Revendications

1. Montage de faux cadre (40) dans un élément châssis (20) de véhicule automobile, l'élément châssis ayant une paire d'éléments tubulaires (21, 22) orientés de manière adjacente l'un par rapport à l'autre pour positionner des parois intérieures respectives (49, 59) des éléments tubulaires respectifs de manière adjacente l'une par rapport à l'autre pour définir une âme interne (24) dans l'élément châssis de véhicule automobile, les éléments tubulaires ayant également des parois extérieures opposées espacées par rapport aux parois intérieures,
**caractérisé en ce que** le montage de faux cadre (40) comporte un élément de montage cylindrique (42) fixé de manière perpendiculaire à une plaque de montage (44), l'élément cylindrique étant reçu à l'intérieur d'une poche cylindrique formée dans les parois intérieures des éléments tubulaires.

2. Montage selon la revendication 1, dans lequel la poche a une ouverture (53) accessible depuis l'extérieur de l'élément châssis pour permettre l'insertion d'un élément de fixation (46) dans l'élément de montage cylindrique (42) à des fins d'assujettissement d'une pièce de faux cadre.

3. Montage selon la revendication 1 ou la revendication 2, dans lequel les éléments tubulaires (21, 22) sont formés avec une première ouverture (55) au travers des parois intérieures et extérieures pour le passage de la plaque de montage au travers des éléments tubulaires.

4. Montage selon l'une quelconque des revendications 1 à 3, dans lequel la poche est formée à partir d'un évidement semi-cylindrique (51, 52) formé dans chaque paroi intérieure respective des éléments tubulaires.

5. Montage selon la revendication 4, dans lequel l'évidement semi-cylindrique dans l'un des éléments tubulaires est formé avec une deuxième ouverture (56) pour le passage de l'élément de montage cylindrique dans la poche, la paroi extérieure dudit un élément tubulaire étant également formée avec la deuxième ouverture pour permettre le passage de l'élément de montage cylindrique depuis l'extérieur de l'élément châssis dans le sens latéral dans la poche.

6. Montage selon la revendication 5, dans lequel la première ouverture (55) et la deuxième ouverture (56) sont formées ensemble dans ledit un élément tubulaire de sorte que l'élément de montage cylindrique (42) et la plaque de montage (44) peuvent passer dans le sens latéral au travers dudit un élément tubulaire.

7. Montage selon l'une quelconque des revendications 1 à 6, dans lequel la plaque de montage (44) est supportée sur les parois intérieures et extérieures des éléments tubulaires (21, 22), la plaque de montage étant soudée aux parois extérieures des éléments tubulaires pour fixer le montage de faux cadre à l'élément châssis.

8. Ensemble longeron inférieur de châssis pour un véhicule automobile comportant un élément tubulaire intérieur (22) ayant une paroi intérieure (49) et une paroi extérieure (48), un élément tubulaire extérieur (21) ayant une paroi intérieure (59) et une paroi extérieure (58) aux dimensions de hauteur et de largeur sensiblement égales à l'élément tubulaire intérieur, l'élément tubulaire intérieur (22) et l'élément tubulaire extérieur (21) étant soudés ensemble pour former une portion s'étendant dans le sens longitudinal, les parois intérieures (49, 59) étant positionnées de manière adjacente l'une par rapport à l'autre pour définir une âme interne orientée généralement dans le sens vertical (24), chacune des parois intérieures étant formée avec un évidement semi-cylindrique (51, 52) aligné pour définir une poche cylindrique à l'intérieur de l'âme interne (24) et un montage de faux cadre (40) selon l'une quelconque des revendications 1 à 6, dans lequel la plaque de montage (44) du montage de faux cadre est supportée sur les parois intérieures (49, 59) et les parois extérieures (48, 58) des éléments tubulaires (21, 22) et l'élément de montage cylindrique (42) du montage de faux cadre est positionné à l'intérieur de la poche cylindrique et est fixé sur la plaque de montage pour distribuer les charges quelconques rencontrées de ce fait sur l'ensemble des parois intérieures et extérieures.

9. Ensemble longeron inférieur de châssis selon la revendication 8, dans lequel les parois intérieures et extérieures sont formées avec une première ouverture (55) pour permettre le passage de la plaque de montage à des fins de support sur chacune des parois intérieures et extérieures.

10. Ensemble longeron inférieur de châssis selon la revendication 8 ou la revendication 9, dans lequel l'un des évidements semi-cylindriques est formé avec une deuxième ouverture (56) pour permettre le passage latéral de l'élément de montage cylindrique dans la poche, la paroi extérieure correspondant audit un évidement semi-cylindrique ayant également une deuxième ouverture formée dans celle-ci pour permettre le passage latéral de l'élément de montage cylindrique dans la poche.

11. Ensemble longeron inférieur de châssis selon l'une quelconque des revendications 8 à 10, dans lequel la plaque de montage est fixée sur les parois extérieures (48, 58) des éléments tubulaires.

12. Ensemble longeron inférieur de châssis selon l'une quelconque des revendications 8 à 11, dans lequel la poche cylindrique est formée avec une ouverture pour permettre l'insertion d'un élément de fixation (46) depuis l'extérieur des éléments tubulaires (21, 22) dans un alésage fileté de l'élément de montage cylindrique (42).

13. Ensemble longeron inférieur de châssis selon l'une quelconque des revendications 8 à 12, dans lequel lesdits un évidement semi-cylindrique et paroi extérieure correspondante où les deuxièmes ouvertures sont formées font partie de l'élément tubulaire intérieur, la paroi extérieure de l'élément tubulaire extérieur ayant uniquement la première ouverture formée dans celle-ci.

14. Procédé de mise en oeuvre d'un montage de faux cadre dans un élément châssis de véhicule automobile, l'élément châssis comprenant une paire d'éléments tubulaires disposés dans le sens latéral, chacun d'entre eux ayant une paroi intérieure et une paroi extérieure, les parois intérieures étant positionnées de manière adjacente l'une par rapport à l'autre pour définir une âme interne dans l'élément châssis de véhicule automobile,
**caractérisé en ce que** le procédé comporte les étapes consistant à
former un évidement semi-cylindrique dans chacune des parois intérieures,
aligner les évidements semi-cylindriques pour former une poche cylindrique à l'intérieur de l'âme interne et positionner un élément de montage cylindrique à l'intérieur de la poche cylindrique,
l'élément de montage cylindrique étant fixé à une plaque de montage qui est supportée sur chacune des parois intérieures et extérieures.

15. Procédé selon la revendication 14, dans lequel le procédé comporte par ailleurs l'étape consistant à établir une première ouverture au travers de chacune des parois intérieures et extérieures en alignement pour le passage de la plaque de montage.

16. Procédé selon la revendication 15, dans lequel le procédé comporte par ailleurs l'étape consistant à créer une deuxième ouverture dans l'un des évidements semi-cylindriques et ladite paroi extérieure correspondante de l'un des éléments tubulaires, la deuxième ouverture étant formée avec la première ouverture.

17. Procédé selon l'une quelconque des revendications 14 à 16, dans lequel l'étape consistant à positionner comprend l'étape consistant à faire passer la plaque de montage et l'élément de montage cylindrique dans le sens latéral au travers de la première ouverture et de la deuxième ouverture dans ledit un évidement semi-cylindrique et la paroi extérieure dudit un élément tubulaire, l'évidement semi-cylindrique servant de butée par rapport au mouvement latéral de l'élément de montage cylindrique.

18. Procédé selon l'une quelconque des revendications 14 à 17, dans lequel le procédé comporte par ailleurs l'étape consistant à souder la plaque de montage sur les deux parois extérieures pour assujettir le montage de faux cadre à l'élément châssis.

19. Procédé selon l'une quelconque des revendications 14 à 18, dans lequel le procédé comporte par ailleurs le raccordement d'un élément de faux cadre au montage de faux cadre par la mise en prise d'un élément de fixation au travers d'une ouverture d'accès au travers de l'élément châssis à des fins de mise en prise avec un alésage fileté à l'intérieur de l'élément de montage cylindrique.

20. Procédé selon l'une quelconque des revendications 14 à 19, dans lequel les étapes consistant à former, établir et créer sont réalisées au cours d'un processus d'hydroformage pour former les éléments tubulaires.
